Europäisches Patentamt

**European Patent Office**

**Office européen des brevets**

(11) Numéro de publication: **0 282 364 B1**

## FASCICULE DE BREVET EUROPEEN

(45) Date de publication de fascicule du brevet: **02.06.93**

(51) Int. Cl.5: **G06F 15/72**

(21) Numéro de dépôt: **88400236.1**

(22) Date de dépôt: **02.02.88**

(54) **Procédé de représentation de l'image en perspective d'un terrain et système pour sa mise en oeuvre.**

(30) Priorité: **10.02.87 FR 8701607**

(43) Date de publication de la demande:
**14.09.88 Bulletin 88/37**

(45) Mention de la délivrance du brevet:
**02.06.93 Bulletin 93/22**

(84) Etats contractants désignés:
**DE ES FR GB IT SE**

(56) Documents cités:
**FR-A- 2 524 177**
**GB-A- 2 113 056**
**US-A- 4 583 185**

**PROCEEDINGS OF THE IEEE 1984 NATIONAL AEROSPACE AND ELECTRONICS CONFE-RENCE NAECON 1984, 21 - 25 mai 1984, vol. 2, pages 1301-1307, IEEE; R.L. HERBELIN et al.: "Airborne electronic terrain map system -- conclusions"**

**COMPUTERS & GRAPHICS, vol. 9, no. 4, 1985, pages 373-381, Pergamon Press Ltd., New York, US; M. JERN: "The raster graphics approach in mapping"**

(73) Titulaire: **SOCIETE D'APPLICATIONS GENERA-LES D'ELECTRICITE ET DE MECANIOUE S A G E M**
**6, Avenue d'Iéna**
**F-75783 Paris Cedex 16(FR)**

(72) Inventeur: **Mouchot, Carine**
**7, rue Foch**
**F-78700 Conflans Ste Honorine(FR)**
Inventeur: **Frappier, Gérard**
**131, rue des Dames**
**F-75017 Paris(FR)**

(74) Mandataire: **Bloch, Gérard et al**
**2, square de l'Avenue du Bois**
**F-75116 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention a tout d'abord pour objet un procédé de représentation, sur un support plan déterminé et en perspective depuis un point d'observation déterminé, de l'image d'un terrain connu par les coordonnées des noeuds d'un réseau maillé déterminé, dans lequel on détermine par interpolation une surface passant par ces noeuds, on détermine un ensemble de points sur cette surface, et on allume les pixels de l'image à représenter qui sont associés à cet ensemble de points, pour visualiser l'image sur le support.

L'invention s'applique en particulier à la présentation, au pilote d'un avion, d'une image synthétique du sol survolé, ou au pilote d'un véhicule terrestre, d'une image synthétique du site dans lequel il évolue, quelles que soient les conditions de visibilité. L'invention permet également la présentation d'images de sites réels ou fictifs à des fins de simulation.

Dans le cas de l'aide aux tâches de pilotage et de navigation, les coordonnées des noeuds du réseau maillé sont stockées dans une mémoire remplie à partir d'une base de données disponible, par exemple, auprès de l'Institut Géographique National. Une telle base de données contient les altitudes de noeuds obtenus en échantillonnant le terrain toutes les trois secondes d'arc, en latitude et en longitude c'est-à-dire environ 65 m en latitude et 92 m en longitude, pour le territoire français. Le point d'observation, ainsi que le support plan sur lequel est représentée l'image, dépendent de la position de l'avion par rapport au terrain, ainsi que de son attitude de façon à ce que, par exemple, l'image représentée corresponde le mieux à ce que le pilote peut voir de son habitacle dans de bonnes conditions de visibilité. Un circuit de traitement, relié à la mémoire de stockage des coordonnées des noeuds du réseau et recevant des données en provenance des instruments de mesure de la position et de l'attitude de l'avion, détermine donc les pixels d'image à allumer et commande en conséquence un écran de visualisation disposé devant le pilote.

On connait déjà un procédé du type défini ci-dessus, décrit dans la demande de brevet française n° 2 524 177. Dans ce procédé, la surface déterminée par interpolation et passant par les noeuds comprend un ensemble de facettes triangulaires qui épouse donc approximativement la forme du terrain, et l'ensemble de points de cette surface auquel seront associés les pixels d'image allumés comprend les noeuds d'un réseau maillé auxiliaire, différent du réseau maillé précédent, et dépendant ici du point d'observation. Ce réseau maillé auxiliaire se projette sur un plan horizontal selon un ensemble de cercles concentriques centrés sur la projection, sur le même plan horizontal, du point d'observation, et selon un ensemble de droites passant par cette projection. En d'autres termes, la projection du réseau auxiliaire sur un plan horizontal constitue une sorte de toile d'araignée centrée sur la projection du point d'observation. La régularité de cette projection du réseau auxiliaire fait que la représentation des noeuds de ce réseau auxiliaire obtenue en allumant les pixels d'image qui leur sont associés donne une image du relief de la surface à facettes, donc du terrain à représenter.

Toutefois, si ce procédé permet une visualisation du relief du terrain, il ne donne que peu d'informations sur le site correspondant, dans la mesure où il ne permet de représenter ni le type de végétation recouvrant le terrain, ni les voies de communication comme les rivières, les routes et le voies ferrées, ni les agglomérations, par exemple.

Pour éviter cet inconvénient, on connaît des procédés permettant la présentation synthétique de paysages relativement réalistes, où figurent en relief les arbres, construction et superstructures, représentés de plus, comme le terrain, avec des couleurs pour en améliorer la lisibilité. Ces procédés présentent cependant l'inconvénient d'être très lourds à mettre en oeuvre, car ils nécessitent une modélisation, à l'aide de facettes colorées, de l'ensemble du paysage, ce qui, à l'heure actuelle, ne peut être fait que manuellement, et par un opérateur qualifié. De plus, lorsque cette coûteuse modélisation a été faite, sa mémorisation occupe une place importante en mémoire, ce qui limite son application à de faibles surfaces de terrain.

La demande de brevet américaine US-A-4 583 185 décrit également un procédé de représentation en perspective du terrain avec des informations de couleur. Cependant ce procédé part de données qui sont corrélées (base de données de couleur correspondant à une base de données d'élévation).

La présente invention vise à pallier les inconvénients précédents en procurant un procédé du type défini ci-dessus, permettant la présentation d'informations relativement complètes tout en demeurant assez simple pour être mis en oeuvre de façon automatique, sans intervention manuelle.

A cet effet, elle a pour objet un procédé tel que revendiqué dans la revendication 1 du type défini ci-dessus, caractérisé par le fait que l'on détermine une carte, ou une photographie, planimétrique du terrain avec des informations de couleur, on numérise la carte pour obtenir des pixels de carte de couleurs déterminées, les points dudit ensemble de points étant déterminés pour qu'ils soient tous respectivement associés à tous les pixels de l'image, on associe à chacun de tous ces points, et donc à chacun des pixels d'image, un pixel de carte, et on allume chaque pixel d'image dans la couleur du pixel de carte associé.

Dans le procédé de l'invention, on superpose à l'image en perspective du terrain, une carte planimétrique numérisée de ce terrain. Par carte planimétrique, on entend ici une carte de type classique, comme une carte routière ou une carte d'état major, mais aussi une photographie aérienne, ou une vue satellite, sous incidence verticale. De telles cartes, numérisées, sont disponibles par exemple auprès de l'Institut Géographique National. Naturellement, le mot "couleur" est à prendre ici au sens large, c'est-à-dire correspondant soit à une représentation multicolore, soit à une représentation du type noir et blanc, comportant une échelle de niveaux de gris.

Dans le cas où l'on utilise une carte de type classique, on obtient alors une représentation en perspective du terrain, "habillé" à l'aide des informations qui se trouvent sur la carte, à savoir d'une part les types de végétation, le cours des rivières, le tracé des routes, les agglomérations et d'autre part les noms de ces rivières, routes et agglomérations, les limites départementales, et les frontières par exemple.

Dans le cas où l'on utilise un plan sur lequel figurent des projets de voies routières ou ferrées, ou autres, on simule en perspective l'intégration future, dans le site, de ces réalisations projetées.

Dans le cas où l'on utilise une photographie aérienne, obtenue à partir d'un avion ou d'un satellite, on visualise, de façon assez réaliste et en perspective, le paysage correspondant.

En d'autres termes, on peut dire qu'on obtient une restitution en relief de l'image à deux dimensions que constitue la carte planimétrique, ce qui améliore en même temps sa lisibilité et celle du relief.

Avantageusement, les pixels du support plan qui ne sont pas des pixels de l'image du terrain sont allumés d'une couleur figurant le ciel.

Avantageusement encore, le point dudit ensemble de points, associé à une pixel d'image est le premier point d'intersection de ladite surface avec le rayon qui part du point d'observation et qui passe par ce pixel d'image.

Alors, les parties cachées du terrain, c'est-à-dire les parties non visibles depuis le point d'observation, se trouvent éliminées.

Avantageusement encore, le pixel de carte associé à un point dudit ensemble de points est le pixel de carte de mêmes coordonnées planimétriques que ce point.

La présente invention a également pour objet un système tel que revendiqué dans la revendication 10 pour la mise en oeuvre du procédé précédent de représentation, sur un support plan déterminé et en perspective depuis un point d'observation déterminé, de l'image d'un terrain connu par les coordonnées des noeuds d'un réseau maillé déterminé, comprenant :

- une première mémoire pour stocker les coordonnées desdits noeuds,
- des moyens pour engendrer un signal de données représentatives du point d'observation et du support plan,
- des moyens reliés à ladite première mémoire et auxdits moyens de génération, pour déterminer par interpolation une surface passant par lesdits noeuds, puis un ensemble de points sur cette surface, et les pixels de l'image à représenter qui sont associés à cet ensemble de points, et
- des moyens de visualisation reliés auxdits moyens de détermination pour allumer lesdits pixels de l'image à représenter,

  système caractérisé par le fait que :

- il comprend une deuxième mémoire pour stocker une carte, ou une photographie, planimétrique du terrain avec des informations de couleur, numérisée sous forme de pixels de carte de couleurs déterminées,
- lesdits moyens de détermination sont reliés à ladite deuxième mémoire et agencés pour déterminer les points dudit ensemble pour qu'ils soient tous respectivement associés à tous les pixels de l'image, pour associer à chacun de tous ces points, donc à chacun des pixels d'image, un pixel de carte et pour allumer chaque pixel d'image dans la couleur du pixel de carte associé.

La présente invention sera mieux comprise grâce à la description suivante de la mise en oeuvre préférée du procédé de l'invention, ainsi que de formes de réalisation du système de l'invention, faite en se référant aux dessins annexés, sur lesquels,

- la figure 1 représente schématiquement un terrain survolé par un avion, ce terrain étant associé à une carte numérisée,
- la figure 2 représente une vue détaillée de la carte numérisée de la figure 1,
- la figure 3 représente une vue de la représentation synthétique, en perspective, du terrain de la figure 1, obtenue à l'aide du procédé de l'invention,
- la figure 4 représente une vue de la représentation synthétique, en perspective, du relief seul du terrain de la figure 1,

- la figure 5 est un diagramme illustrant les procédés d'interpolation pouvant être utilisés dans le procédé de l'invention, et,
- la figure 6 est une représentation schématique, par blocs, d'un système mettant en oeuvre le procédé de l'invention.

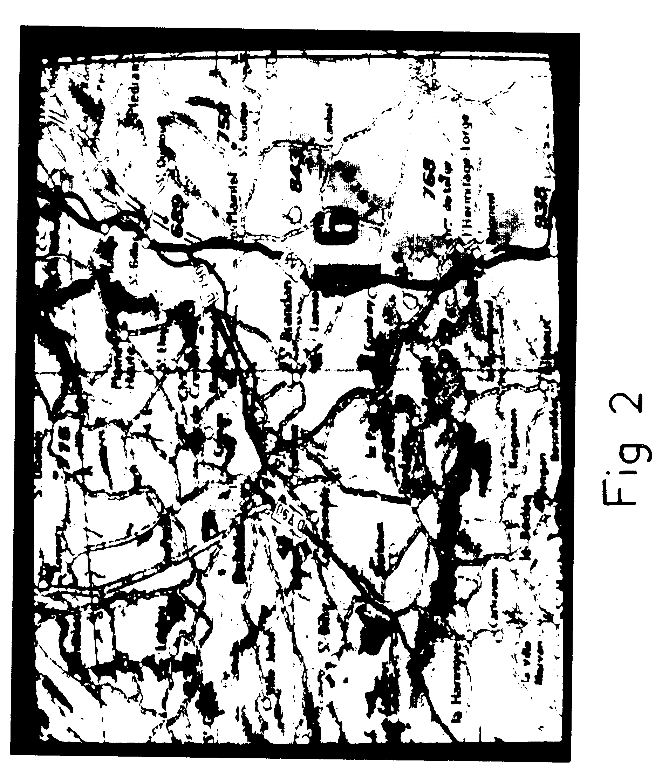

Le dossier du présent brevet contient trois photographies en couleur correspondant aux figures 2 à 4.

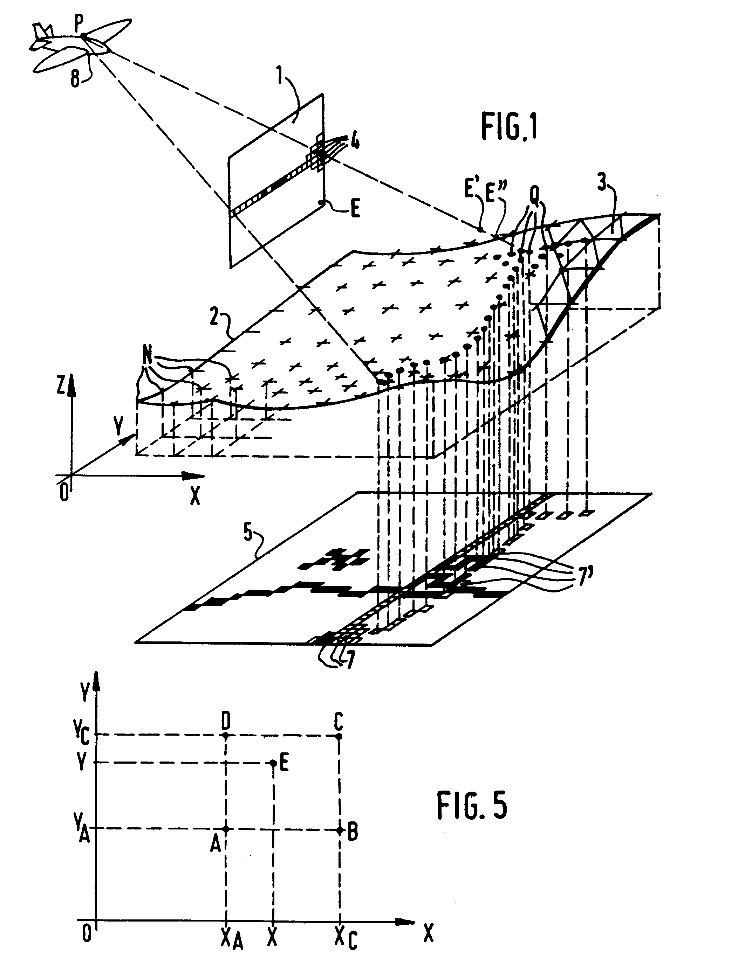

En référence à la figure 1 un procédé de représentation synthétique d'un terrain 2, pour le pilote d'un avion 8 survolant ce terrain 2, est décrit à titre d'exemple.

Le point d'observation est le point P et un support plan 1, ici rectangulaire, figure par exemple la fenêtre de l'habitacle de l'avion, à travers laquelle peut être vu le terrain 2 survolé, si les conditions de visibilité sont bonnes. Sur la figure 1, et pour des raisons évidentes de clarté, le support plan 1 est considérablement agrandi. Le procédé de représentation synthétique décrit se propose de fournir à l'observateur une image en perspective, synthétique, du terrain survolé, comparable à l'image vraie, mais indépendante des conditions de visibilité. Cette image synthétique, produite à partir d'informations concernant la terrain 2 stockées en mémoire, et d'informations en provenance des instruments de bord concernant la position et l'attitude de l'avion 8 par rapport au terrain 2, est présentée à l'observateur de façon connue, par exemple à l'aide d'un écran de même taille que le support plan 1 ou de taille différente, ou encore par l'intermédiaire d'un dispositif connu de superposition avec l'image vraie.

Les informations concernant le terrain 2 stockées en mémoire comprennent d'une part des informations altimétriques et d'autre part des informations planimétriques, ces deux types d'informations étant fournies ici et pour le territoire français, par l'Institut Géographique National.

Les informations altimétriques comprennent les coordonnées de noeuds N d'un réseau maillé obtenu en échantillonnant le terrain toutes les trois secondes d'arc, c'est-à-dire, et comme cela a déjà été indiqué, environ 65 m en latitude et environ 92 m en longitude. Pour chacun de ces noeuds, on connaît donc, dans un repère trirectangle OX, OY, OZ lié au sol, la coordonnée X de latitude, la coordonnée Y de longitude, et la coordonnée Z d'altitude.

Les informations planimétriques comprennent une carte 5 du terrain, avec des informations de couleur, représentant ici et à titre d'exemple, le type de végétation, le cours des rivières, le tracé des routes, les agglomérations, ainsi que les noms de ces rivières, routes et agglomérations, et d'autres indications de ce type. La carte 5 est numérisée, c'est-à-dire qu'elle a été divisée en une pluralité de surfaces élémentaires, ou éléments d'images, ou pixels, tels que les pixels 7 et $7'$ de la figure 1. La taille de ces pixels est, de façon connue, choisie assez petite pour que l'on puisse affecter à chacun d'entre eux une couleur uniforme, choisie dans un ensemble fini de couleurs quantifiées, sans perte notable d'information. De telles cartes sont disponibles auprès de l'Institut Géographique National. La figure 2, qui est une photographie d'un écran cathodique, fournit un exemple de carte numérisée, représentant en particulier des routes et des agglomérations. Naturellement une telle carte peut être aisément mémorisée puisqu'elle est totalement définie par la connaissance des coordonnées planimétriques, c'est-à-dire de latitude X et de longitude Y, et de la couleur quantifiée de chacun des pixels de carte.

Du fait que l'altitude du terrain 2 n'est connue que pour les noeuds N et que, comme on va le voir dans la suite, il sera utile de connaître cette altitude pour certains points ne coïncidant pas nécessairement avec ces noeuds N, on détermine une surface 3 connue partout, et épousant approximativement la forme du terrain 2. Pour cela, et de façon connue, on détermine une surface 3 par interpolation à partir des coordonnées des noeuds N. sur la figure 1, on a représenté la surface 3 obtenue en remplaçant chaque portion de terrain comprise entre trois noeuds par une face plane triangulaire. Il existe naturellement d'autres types d'interpolation qui seront décrits dans la suite, après une première description d'ensemble du procédé.

Après avoir défini le type d'interpolation adopté, on se trouve en mesure de déterminer, pour chaque pixel 4 du support plan 1 qui appartient à l'image du terrain 2, le point Q de la surface 3 associé à ce pixel 4, et que ce pixel 4 représente, c'est-à-dire le premier point d'intersection Q de cette surface 3 avec le rayon qui part du point P et passe par le pixel 4. La démarche suivie pour déterminer le point Q sera décrite dans la suite.

Les coordonnées planimétriques X et Y de ce point Q permettent de déterminer le pixel $7'$ de la carte 5 associé à ce point Q de la surface 3 c'est-à-dire, pratiquement, du terrain 2.

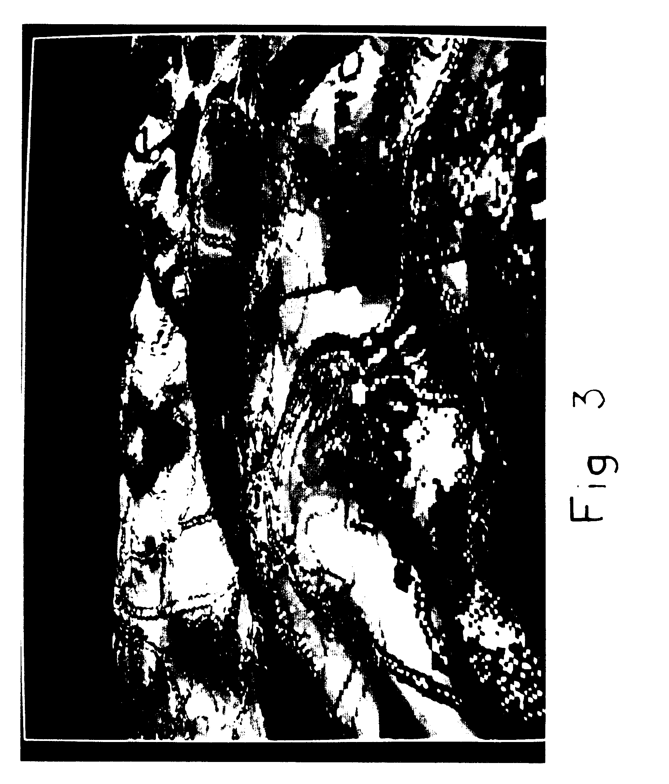

Comme on le remarque sur la figure 1, une ligne horizontale, par exemple, de pixels d'image 4 correspond à une suite de points Q de la surface 3 qui dessine dans l'espace une courbe gauche. Cette courbe gauche ne se projette évidemment pas sur la carte 5 selon une droite, mais selon un courbe quelconque. Il en résulte que, en allumant chaque pixel d'image 4 dans la couleur du pixel de carte $7'$ qui lui est associé, on obtient une représentation déformée de la carte 5, comme si cette carte était dessinée sur la surface 3 elle-même au lieu d'être dessinée sur un plan; l'ensemble est donc représenté en perspective. La figure 3, qui est une photographie d'un écran cathodique, montre le résultat obtenu à partir de la carte de la figure 2 et des informations altimétriques du terrain correspondant. Sur la figure 3, qui montre la déformation des routes et des agglomérations de la figure 2, on voit que l'on a réalisé une superposition de la carte 5 et de l'image en perspective du terrain 2.

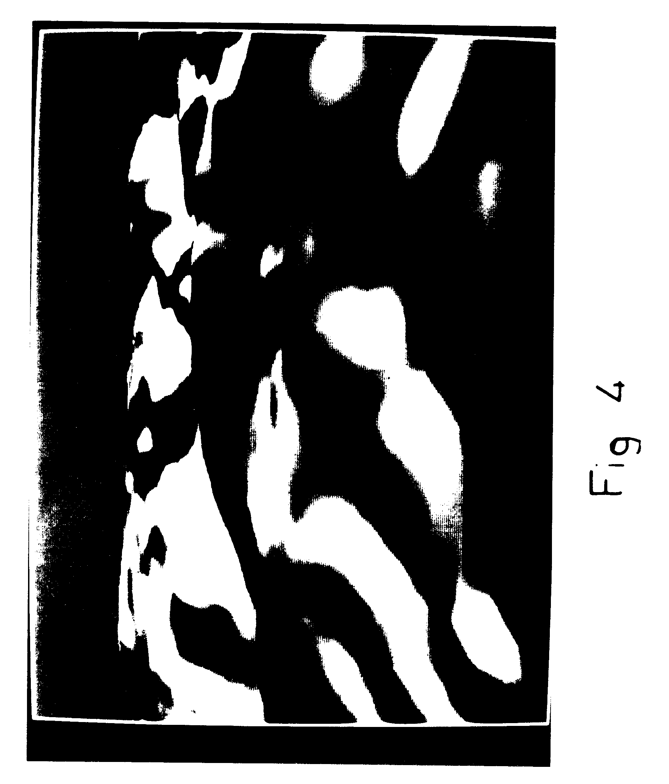

Sur la figure 3, afin d'améliorer encore la lisibilité de l'image obtenue, on a allumé chaque pixel d'image 4 dans la couleur du pixel de carte 7' associé, avec une intensité qui dépend de l'éclairement du terrain 2, au voisinage du point Q associé à ce pixel d'image 4, c'est-à-dire du point Q que représente ce pixel d'image 4. A cet effet, on choisit une direction d'éclairement du terrain, par exemple qui coïncide avec celle du soleil, et on calcule l'éclairement au voisinage de chaque point Q. Cette technique, connue dans le cas où l'on affecte à la surface 3 représentée une couleur uniforme, et décrite plus en détails dans la suite, permet de restituer une bonne lisibilité au relief, comme le montre, dans ce cas, la figure 4. La figure 4, toujours une photographie d'un écran cathodique, montre un "effet de dunes" qui représente, en fait, le résultat obtenu dans le cas de la représentation du relief seul de la portion de terrain représentée sur la figure 3. Naturellement, cette modulation de l'intensité lumineuse de chaque pixel, si elle améliore fortement la lisibilité de l'image obtenue, n'est pas toujours obligatoire. Par exemple, dans le cas où la carte utilisée est une photographie aérienne, celle-ci comporte généralement un ombrage naturel, qui suffit à donner une idée du relief. Ce relief apparait également du fait que certaines parties de la surface et du terrain étant cachées, certaines parties de la carte ne seront pas représentées. En effet, comme on associe à chaque pixel d'image le premier point d'intersection Q de la surface 3 avec le rayon qui part du point P et qui passe par le pixel 4, c'est-à-dire le point d'intersection le plus proche du point P, les parties de la surface 3 non visible du point P ne sont pas représentées.

Naturellement, lorsque le rayon qui part du point P et qui passe par un pixel du support plan 1 n'intercepte pas la surface 3, ou l'intercepte à une distance supérieure à un seuil définissant l'horizon, on considère que ce pixel n'est pas un pixel d'image 4 et on l'allume d'une couleur figurant le ciel, par exemple la couleur bleue. Ceci peut se produire si le rayon passe au-dessus de la ligne d'horizon, ou si les données mémorisées, tant altimétriques que planimétriques, ne concernent qu'une portion du terrain qui se trouve dans le champ de vision défini par le point P et le support plan 1.

En référence à la figure 5, différents exemples de détermination, par interpolation, de la surface 3 sont décrits. Sur cette figure le point E représente un point de coordonnées planimétriques X et Y, dont il faut déterminer l'altitude Z sachant qu'il se trouve dans la maille du réseau maillé définie par les quatre noeuds A, B, C, D de coordonnées $(X_A, Y_A, Z_A)$, $(X_C, Y_A, Z_B)$, $(X_C, Y_C, Z_C)$, et $(X_A, Y_C, Z_D)$, respectivement.

Un premier type d'interpolation, assez grossière, consiste à affecter au point E l'altitude Z du noeud le plus proche, ici le noeud D :

$$Z = Z_D$$

Dans ce cas, le terrain 2 est assimilé à une surface 3 formée de rectangles horizontaux, de surface égale à celle d'une maille, et centrés sur chaque noeud.

Un deuxième type d'interpolation est l'interpolation par facettes représentée sur la figure 1, qui revient à affecter au point E une altitude Z dépendant des altitudes des trois noeuds les plus proches, ici les noeuds A, D et C, selon la formule suivante, bilinéaire en X et Y :

$$Z = \frac{(Y-Y_C)}{(Y_A-Y_C)} Z_A + \left[\frac{(X_A-X)}{(X_C-X_A)} + \frac{(Y-Y_A)}{(Y_C-Y_A)}\right] Z_D + \frac{(X-X_A)}{(X_C-X_A)} Z_C$$

Un troisième type d'interpolation est l'interpolation par surfaces non planes se projetant selon la maille ABCD, qui revient à affecter au point E une altitude Z dépendant des altitudes des quatre noeuds A, B, C et D de la maille, selon la formule suivante, également bilinéaire en X et Y :

$$Z = \frac{(X-X_C)\ (Y-Y_C)}{(X_A-X_C)(Y_A-Y_C)}\ Z_A + \frac{(X-X_A)\ (Y-Y_C)}{(X_C-X_A)\ (Y_A-Y_C)}\ Z_B +$$

$$\frac{(X-X_A)\ (Y-Y_A)}{(X_C-X_A)(Y_C-Y_A)}\ Z_C + \frac{(X-X_C)\ (Y-Y_A)}{(X_A-X_C)(Y_C-Y_A)}\ Z_D$$

Les trois types d'interpolation qui précèdent, ainsi que d'autres, sont bien connus de l'homme de métier, qui est apte à choisir celle qui lui paraît la mieux adaptée, compte tenu du compromis à réaliser entre le précision de l'interpolation et la complexité des calculs qui en résultent.

Lorsque le type d'interpolation déterminant la surface 3 à laquelle on assimile le terrain 2 est définie, on calcule le point d'intersection Q associé à chaque pixel du support plan 1, c'est-à-dire à chaque pixel d'écran, en procédant de la façon suivante.

On décompose le support plan 1 en une matrice de pixels qui correspondent aux pixels de l'écran grâce auquel l'image sera visualisée. On procède colonne par colonne, en commançant à chaque fois par le pixel le plus bas de la colonne, qui est, en principe, celui qui est le plus proche de la surface 3 et pour lequel on est presque certain de trouver un point d'intersection Q avec la surface 3.

Pour le pixel le plus bas d'une colonne, on utilise un point E, situé sur le rayon qui part du point P et qui passe par ce pixel, et dont on fait varier la position.

Initialement, ce point E est sur le support plan 1. Ainsi, on est certain que le point E est au-dessus de la surface 3. Après avoir choisi un pas de progression D sur le rayon, on augmente la distance PE pas par pas, en regardant, à chaque fois, la position relative du point E par rapport à la surface 3. Dès que le point E se trouve en dessous de la surface 3, on procède à une recherche du point d'intersection par la méthode connue de dichotomie, c'est-à-dire que l'on réduit la distance PE de $D/2$, puis $D/4$, et ainsi de suite, c'est-à-dire par pas de valeur chaque fois égale à la moitié de celle du pas précédent, jusqu'à ce que le point E passe au-dessus de la surface 3. Alors on augmente à nouveau la distance PE par pas de valeur chaque fois égale à la moitié de celle du pas précédent, c'est-à-dire de $D/2^{n+1}$, $D/2^{n+2}$, et ainsi de suite, si la valeur $D/2^n$ était celle qui a fait passer le point E au dessus de la surface 3. On continue jusqu'à par exemple, une augmentation de distance égale à $D/2^p$, qui fait passer le point E au-dessous de la surface 3, et ainsi de suite.

Comme cela est connu, si l'on arrête lorsque la variation de distance entre deux points E successifs est inférieure à un seuil donné, par exemple $D/2^N$ et si l'on appelle $E'$ le dernier point E obtenu, on est certain que la distance entre $E'$ et le point d'intersection Q est inférieure au seuil. En choisissant N assez grand, on peut donc affecter au point Q les coordonnées du point $E'$ sans faire une erreur importante.

En principe, comme il s'agit du pixel le plus bas de la colonne, on trouve un point d'intersection Q à distance finie. Si on ne trouve pas de point d'intersection alors que la distance PE dépasse un seuil correspondant sensiblement à l'horizon, on considère que le pixel n'est pas un pixel 4 de l'image du terrain 2 et on l'allume de la couleur du ciel, ainsi que les pixels suivants de la colonne.

Si, comme cela est en général le cas, on a trouvé le point d'intersection Q à distance finie, le pixel considéré appartient à l'image du terrain 2, et on l'allume dans la couleur du pixel $7'$ de la carte 5 qui lui est associé, c'est-à-dire du pixel $7'$ de même coordonnées planimétriques X et Y que le point d'intersection Q.

On passe alors au pixel suivant de la colonne, pour lequel on procède à la recherche du point d'intersection Q de la surface 3 et du rayon qui part du point P et qui passe par ce pixel en procédant sensiblement comme pour le pixel le plus bas, à ceci près que, d'une part, on part d'un point $E'$ dont la distance initiale au support plan 1, au lieu d'être nulle, est égale à la distance PQ trouvée pour le pixel précédent, et que, d'autre part, le pas de progression sur le rayon est choisi égal à $D'$ avec $D'$ inférieur à D. Comme, en principe, les points Q associés à deux pixels d'image 4 adjacents ne sont pas très éloignés, on gagne ainsi en temps de calcul.

Pour améliorer la lisibilité de l'image obtenue, on peut allumer chaque pixel d'image 4 avec une intensité variable, dépendant du point Q du terrain auquel il est associé, et qu'il représente.

A titre d'exemple, on peut faire dépendre l'intensité lumineuse du pixel d'image 4 de la distance PQ, pour que cette intensité soit d'autant plus faible que la distance PQ est grande. Une loi inversement proportionnelle au carré de la distance convient bien.

On peut également faire dépendre l'intensité lumineuse de l'altitude du point Q représenté, pour que cette intensité soit d'autant plus faible que l'altitude est élevée, ou encore en traitant cette altitude par paliers discontinus, pour faire apparaître des courbes de niveau.

On peut également, et comme cela a déjà été signalé et représenté sur les figures 3 et 4, définir une direction d'éclairement à l'aide d'un vecteur normalisé, et faire dépendre l'intensité lumineuse de l'éclairement du point Q représenté. A cet effet, on calcule la normale à la surface 3 en Q, éventuellement par une méthode approchée de type connu, et on effectue le produit scalaire de la normale et du vecteur d'éclairement. Ce produit scalaire dépend de l'angle entre les deux vecteurs. L'intensité lumineuse dépend du module du produit scalaire si celui-ci est négatif, et si ce produit est positif, l'intensité lumineuse est nulle car, bien que le point Q se trouve vu depuis le point d'observation P, il n'est pas éclairé par la source d'éclairement.

On notera par ailleurs que, dans le procédé employé, le problème de l'élimination, sur l'image représentée, des parties cachées, c'est-à-dire des parties qui ne se trouvent pas vues depuis le point d'observation P, ne se pose pas dans la mesure où l'on choisit toujours le premier point d'intersection Q sur le rayon en provenance du point P.

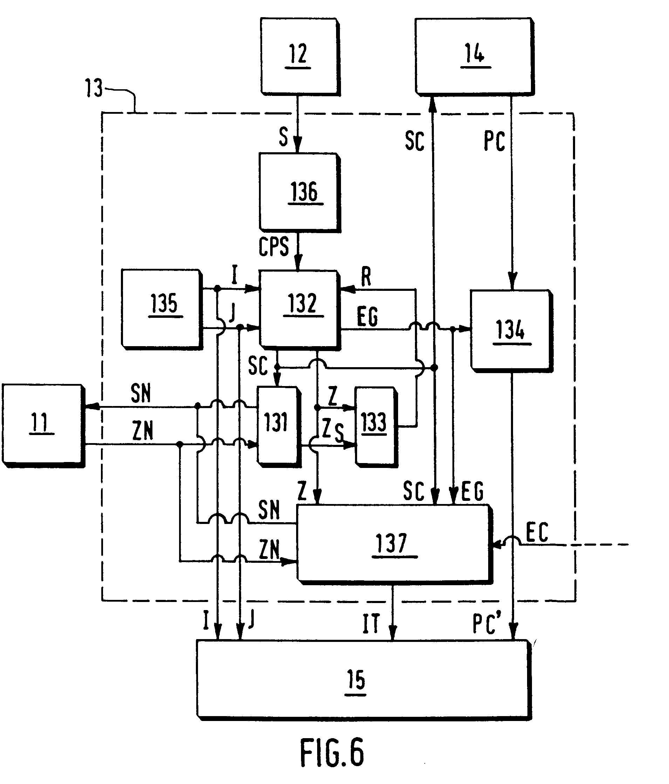

Le procédé qui vient d'être décrit est, par exemple, mis en oeuvre à l'aide du système de la figure 6.

Ce système comprend principalement un circuit de traitement 13, relié à deux mémoires 11 et 14 et au système 12 de navigation inertielle de l'avion 8, et commandant un dispositif de visualisation 15.

Le système 12 de navigation inertielle de l'avion est du type connu qui délivre un signal de données S représentatif de la position de l'avion et de son attitude donc du point d'observation P et du support plan 1.

La mémoire 11 contient des données altimétriques concernant le terrain 2 survolé. Elle est pourvue d'une entrée recevant un signal d'adressage SN et d'une sortie délivrant un signal ZN. Le signal d'adressage SN représente les coordonnées X et Y d'un noeud N du réseau maillé et le signal de sortie ZN l'altitude Z de ce noeud N.

La mémoire 14 contient les données planimétriques du terrain 2 survolé, c'est-à-dire la carte numérisée 5. Elle comprend une entrée recevant un signal d'adressage SC et une sortie délivrant un signal PC. Le signal d'adressage SC représente les coordonnées X et Y d'un pixel de carte 7 et le signal de sortie PC représente la couleur de ce pixel de carte 7.

Le dispositif de visualisation 15 est du type connu comportant un écran, par exemple un écran cathodique, organisé en une matrice de pixels, comportant quatre entrées recevant les signaux I, J, IT et PC$'$ correspondant respectivement à la ligne, la colonne, l'intensité lumineuse et la couleur du pixel à allumer.

Le circuit de traitement 13 est agencé pour déterminer par interpolation la surface 3, puis chaque point Q de cette surface 3 associé à chaque pixel d'image 4, c'est-à-dire chaque point Q d'intersection de la surface 3 avec le rayon qui part du point P et qui passe par ce pixel d'image 4, et enfin chaque pixel de carte 7$'$ associé à chaque point Q, donc à chaque pixel d'image 4.

Le circuit de traitement 13 comprend un circuit 136 qui, en réponse au signal S, calcule, dans le repère lié au sol OX, OY, OZ les coordonnées du point P et du support 1. Il délivre un signal de données CPS.

Un circuit de balayage 135 délivre les signaux I et J de façon à commander le balayage de l'écran du dispositif de visualisation 15 colonne par colonne, en commençant, dans chaque colonne par le pixel le plus bas.

Un circuit 132 calcule, en réponse au signal CPS et aux signaux I et J, les coordonnées du point E, ou du point E$'$, situé sur le rayon partant de P et passant par le pixel défini par les signaux I et J. Le circuit 132 délivre deux signaux SC et Z représentatifs le premier des coordonnées planimétriques X et Y et le second de l'altitude Z du point E, ou de point E$'$.

Un circuit 131 de calcul de la surface 3 par interpolation, relié à la mémoire 11 avec laquelle il échange les signaux SN et ZN, reçoit le signal SC et délivre un signal ZS qui représente l'altitude du point de la surface 3 ayant les coordonnées planimétriques X et Y du point E, ou du point E$'$.

Un circuit de comparison 133, recevant les signaux Z et ZS, compare leurs valeurs. Il est pourvu d'une sortie délivrant un signal binaire R. Le signal R est au niveau haut lorsque Z est supérieur à ZS, c'est-à-dire lorsque le point E, ou le point E$'$ est au-dessus de la surface 3. Il commande alors le circuit de calcul 132 pour faire avancer le point E, ou le point E$'$, sur le rayon, c'est-à-dire pour augmenter la distance PE. Le signal R est au niveau bas lorsque Z est inférieur à ZS, c'est-à-dire lorsque le point E, ou le point E$'$, est au dessous de la surface S. Il commande alors le circuit de calcul 132 pour faire reculer le point E, ou le point E$'$, sur le rayon, c'est-à-dire pour réduire la distance PE.

Le circuit 132 est agencé pour effectuer la dichotomie précédemment décrite et lorsque la distance entre deux points successifs est inférieure au seuil $D/2^N$ défini ci-dessus, il délivre un signal binaire EG de commande d'un circuit de porte 134, qui permet d'appliquer au dispositif de visualisation le signal $PC'$ identique au signal PC représentant la couleur du pixel de carte $7'$ dont les coordonnées planimétriques X et Y sont définies par le signal SC, c'est-à-dire qui sont celles du point d'intersection Q.

Ainsi, on peut dire que le circuit de porte 134 permet d'associer à chaque point d'intersection Q un pixel de carte $7'$.

De même, on peut dire que le circuit de calcul 132 et le circuit de comparaison 133 associent, à un pixel d'image 4, le point d'intersection Q de la surface 3 avec le rayon qui passe par ce pixel d'image 4.

Le circuit 137 calcule ici l'intensité lumineuse avec laquelle il faut allumer le pixel défini par les signaux I et J pour tenir compte de l'éclairement de la surface 3, c'est-à-dire du terrain 2. A cet effet, il reçoit les signaux SC, Z et EG, de façon à disposer des coordonnées du point d'intersection Q et il est relié à la mémoire 11 avec laquelle il échange les signaux SN et ZN pour calculer la normale en Q à la surface 3. A partir de la direction d'éclairement défini par un signal EC extérieur et que l'opérateur peut modifier, il calcule l'intensité lumineuse à affecter au pixel comme cela a été décrit précédemment.

Naturellement, le circuit de traitement 13 peut être réalisé également à l'aide d'un circuit de calcul unique qui accomplit séquentiellement les tâches des circuits 131 à 137. A titre d'exemple, les pages 20, 21 et 22 décrivent un organigramme illustrant le fonctionnement d'un tel circuit.

Boucle sur les colonnes de l'écran
J=Jdeb,Jfin — 101

Boucle sur les lignes
I = Ideb,Ifin — 102

Calcul des coordonnées du point E de l'écran
dans le repère lié à l'écran — 103

Passage dans le repère lié au sol
E(X,Y,Z) — 104

I = Ideb ? — 105
Non          Oui

B          /\

Calcul de la direction
du rayon PE
Calcul de l'intersection Q
du rayon avec le terrain — 107

Calcul de la direction
du rayon PE
Calcul de l'intersection Q
du rayon avec le terrain — 106

C

Hors secteur de visualisation ? — 108
Non          Oui

IPIX(I,J) est obtenu
a partir de IMA
au point Q — 110

IPIX(i,J) = Nciel
i = I,Ifin — 109

I = Ifin ? — 111
Non

J = Jfin ? — 112
Non          FIN

(A)

Initialisations
DINT = D
CIEL = Fausse
~1061

Calcul des incréments de progression sur le rayon :
DX = D*Dray*(X-XYI)
DY = D*Dray*(Y-YVI)
DZ = D*Dray*(Z-ZYI)
~1062

E = E'

E'
X' = X + DX
Y' = Y + DY
Z' = Z + DZ
~1063

E' appartient-il au secteur visualisé ?   ~1064   Non

E' est-il au dessous du terrain ?   ~1067

Non

Dichotomie sur les coordonnées de E et E'
jusqu'à ce que : Dist(E',E) < Seuil
~1068

~1065
CIEL = vraie

~1066
DINT = DHOR

Q (intersection ) = E'
Calcul de DINT:
DINT = Dist(P,Q)
~1069

(C)

10

Sur la page 20 les blocs 101 à 105 n'appellent pas de commentaires particuliers.

Le bloc 106 est détaillé sur la page 21. Dans le bloc 1061, la variable DINT représente la distance entre le point P et le point d'intersection Q. Dans les blocs 1061 et 1065 la variable CIEL est "fausse" si le pixel d'écran est un pixel 4 de l'image du terrain et "vraie" dans le cas contraire, où le pixel correspondant est allumé de la couleur du ciel.

Dans le bloc 1062, la variable Dray représente l'inverse de la norme du segment de rayon qui passe par le point d'observation P, de coordonnées XVI, YVI et ZVI et le point E de coordonnées X, X, Z. La variable D représente le pas de progression sur le rayon.

Dans le bloc 1066, la distance DHOR est la distance au delà de laquelle on peut considérer qu'on a atteint la ligne d'horizon.

Le bloc 107 est détaillé sur la page 22 à propos duquel des remarques similaires à celles qui ont été faites à propos du bloc 106 peuvent être faites.

Dans le bloc 109 de la page 20, le tableau IPIX représente le tableau des pixels d'écran et la variable Nciel représente la couleur choisie pour le ciel. On remarque que, lorsqu'un pixel d'écran n'est pas un pixel d'image, on affecte systématiquement la couleur du ciel à tous les pixels de la colonne qui sont disposés au-dessus, ce qui permet de gagner en temps de calcul sans risque d'une trop grande perte d'information.

Dans le bloc 110, le tableau IMA représente les pixels de la carte 5 numérisée.

Naturellement, la présente invention n'est pas limitée à la description qui vient d'en être faite. En particulier il est à la portée de l'homme de métier de modifier certaines étapes, de façon connue, pour réduire le temps de calcul. Par exemple, tant que le point E, ou le point $E'$, se trouvent relativement loin du terrain 2, il n'est pas obligatoire de calculer, par interpolation bilinéaire, l'altitude du point de la surface 3 qui lui correspond. Une simple interpolation grossière peut suffire, le calcul de l'interpolation bilinéaire n'étant alors entrepris que lorsque le point E est assez proche du terrain 2.

## Revendications

1. Procédé de représentation, sur un support plan déterminé (1) et en perspective depuis un point d'observation déterminé (P), de l'image d'une surface (3) d'un terrain (2) connu par les coordonnées des noeuds (N) d'un réseau maillé déterminé et par des pixels (7,7') de couleur déterminée d'une carte, ou photographie (5) planimétrique du terrain numérisée, dans lequel on associe à chaque pixel d'image (4) de l'image à représenter un pixel de carte (7') et on allume chaque pixel d'image dans la couleur du pixel de carte associé, caractérisé bar le fait que l'on détermine par interpolation à partir des noeuds (N) du réseau maillé un ensemble de points (Q) sur cette surface pour que cesdits points (Q) soient tous respectivement associés suivant un algorithme de perspective à tous les pixels d'image (4), ensuite on associe chacun de ces points (Q) suivant un algorithme de projection à un pixel de carte (7').

2. Procédé selon la revendication 1, dans lequel les pixels du support plan (1) qui ne sont pas des pixels (4) de l'image du terrain (2) sont allumés d'une couleur figurant le ciel.

3. Procédé selon l'une des revendication 1 ou 2, dans lequel le point dudit ensemble de points, associé à un pixel d'image (4), est le premier point d'intersection (Q) de ladite surface (3) avec le rayon qui part du point d'observation (P) et qui passe par ce pixel d'image (4).

4. Procédé selon l'une des revendications 1 à 3, dans lequel le pixel de carte associé à un point (Q) dudit ensemble de points est le pixel de carte $(7')$ de mêmes coordonnées planimétriques que ce point (Q).

5. Procédé selon l'une des revendications 3 ou 4, dans lequel, pour déterminer ledit point d'intersection (Q) :
   - on part d'un point $(E; E')$ situé sur ledit rayon à une distance initiale, de valeur déterminée, dudit support plan (1),
   - on détermine la position relative dudit point $(E; E')$ par rapport à ladite surface (S) et si ledit point $(E; E')$ se trouve au-dessus de ladite surface (S), on augmente sa distance du support plan (1) par pas de valeur constante $(D; D')$ jusqu'à ce que ledit point $(E; E')$ se trouve au dessous de ladite surface (S),
   - on réduit alors ladite distance, par pas de valeur chaque fois égale à la moitié de celle du pas précédent $(D/2, D/4, ..., D/2^n)$ jusqu'à ce que ledit point $(E; E')$ se trouve au-dessus de ladite surface (3),
   - on augmente alors ladite distance, par pas de valeur chaque fois égale à la moitié de celle du pas précédent $(D/2^{n+1}, D/2^{n+2}, ..., D/2^p)$ jusqu'à ce que ledit point $(E; E')$ se trouve au dessous de ladite surface (S),
   - on procède ainsi jusqu'à obtenir un point $(E'; E'')$ dont la distance au point précédent $((E; E')$ est inférieure à un seuil déterminé $(D/2^N)$ et on affecte audit point d'intersection (Q) les coordonnées de ce point (E′; E″).

6. Procédé selon la revendication 5, dans lequel les pixels du support plan (1) sont organisés en une matrice ayant une pluralité de lignes et une pluralité de colonnes et on procède colonne par colonne, comme suit :

- on détermine si le pixel le plus bas de la colonne du support plan (1) est un pixel (4) de l'image du terrain (2) en recherchant le premier point d'intersection (Q) de ladite surface (3) avec le rayon qui part du point d'observation (P) et passe par ce pixel, à partir d'une distance initiale de valeur nulle entre le support plan (1) et ledit point (E) sur ce rayon,
- si ce pixel n'est pas un pixel d'image (4) on l'allume d'une couleur figurant le ciel, ainsi que tous les pixels suivants de la colonne,
- si ce pixel est un pixel d'image (4) on l'allume dans la couleur du pixel de carte (7′) associé et on passe au pixel suivant de la colonne, pour lequel on recherche le premier point d'intersection (Q), en prenant cette fois comme distance initiale entre le support plan (1) et ledit point (E′) sur le rayon, la distance entre le point d'observation (P) et le point d'intersection (Q) précédemment déterminé.

7. Procédé selon l'une des revendications 1 à 6, dans lequel on allume chaque pixel d'image (4), dans la couleur du pixel de carte (7′) associé, avec une intensité d'autant plus faible que la distance entre le point d'observation (P) et le point (Q) dudit ensemble de points, associé à ce pixel d'image (4), est grande.

8. Procédé selon l'une des revendications 1 à 6, dans lequel on allume chaque pixel d'image (4), dans la couleur du pixel de carte (7′) associé, avec une intensité liée à l'altitude du point (Q) dudit ensemble de points, associé à ce pixel d'image (4).

9. Procédé selon l'une des revendications 1 à 6, dans lequel une direction d'éclairement du terrain (2) étant déterminée, on allume chaque pixel d'image (4), dans la couleur du pixel de carte (7′) associé, avec une intensité qui dépend de l'éclairement de la surface (3) au voisinage du point (Q) dudit ensemble de points, associé à ce pixel d'image (4).

10. Système de représentation, sur un support plan déterminé (1) et en perspective depuis un point d'observation déterminé (P), de l'image d'un terrain (2) connu par les coordonnées des noeuds (N) d'un réseau maillé déterminé, comprenant :

- une première mémoire (11) pour stocker les coordonnées desdits noeuds (N),
- une deuxième mémoire (14) pour stocker une carte, ou une photographie, (5) planimétrique du terrain (2) avec des informations de couleur, numérisée sous forme de pixels (7,7') de carte de couleurs déterminées,
- des moyens (12) pour engendrer un signal (s) de données représentatives du point d'observation (P) et du support plan (1),
- des moyens (13) reliés à ladite première mémoire (11), à ladite deuxième mémoire (14) et auxdits moyens de génération (12) pour associer à chaque pixel d'image (4) de l'image à représenter un pixel de carte (7'),
- des moyens de visualisation (14) reliés auxdits moyens de détermination (13) pour allumer lesdits pixels (4) de l'image à représenter dans la couleur du pixel de carte (7') associé,

système caractérisé par le fait que les moyens (13) d'association comprennent des moyens pour déterminer par interpolation à partir desdits noeuds (N) un ensemble de points (Q) sur cette surface (3), pour que cesdits points (Q) soient tous respectivement associés suivant un algorithme de perspective à tous les pixels (4) de l'image à représenter, et pour associer suivant un algorithme de projection à chacun de tous ces points (Q), donc à chacun des pixels d'image (4), un pixel de carte (7').

11. Système selon la revendication 10, dans lequel lesdits moyens de détermination (13) comprennent :

- des moyens (131) de calcul de ladite surface (3) reliés à ladite première mémoire (11),
- des premiers moyens (132, 133), reliés auxdits moyens de génération (12) et auxdits moyens de calcul (131), pour associer à un pixel d'image (4) le premier point d'intersection (Q) de ladite surface (3) avec le rayon qui part du point d'observation (P) et passe par ce pixel d'image (4) , et,

- des deuxièmes moyens (134) reliés auxdits moyens d'association (132, 133) et à la deuxième mémoire (14), pour associer à chacun des points d'intersection (Q) le pixel de carte (7') sur lequel se trouve le point de même coordonnées planimétriques que ce point d'intersection (Q).

## Claims

1. A method for representing, on a given flat support (1) and in perspective from a given point (P) of observation, the image of a surface (3) of a terrain (2) known by the coordinates of the nodes (N) of a given mesh network and by pixels (7,7') of given colors of a planimetric digitized map, or photograph, (5) of the terrain, wherein a map pixel (7') is associated with each image pixel (4) of the image to be represented and each image pixel is illuminated in the color of the associated map pixel, characterized by the fact that a set of points (Q) on this surface is determined by interpolation from the nodes (N) of the mesh network, in order that said points (Q) be all respectively associated, according to a perspective algorithm, with all the image pixels (4), then each of these points (Q) is associated, according to a projection algorithm, with a map pixel (7').

2. The method as claimed in claim 1, wherein the pixels of the flat support (1) which are not pixels (4) of the image of the terrain (2) are illuminated with a color representing the sky.

3. The method as claimed in any of claims 1 and 2, wherein the point of said assembly of points, associated with an image pixel (4), is the first intersection point (Q) of said surface (3) with a line leaving from the observation point (P) and passing through this image pixel (4).

4. The method as claimed in any of claims 1 to 3, wherein the map pixel associated with a point (Q) of said assembly of points is the map pixel (7') having the same planimetric coordinates as this point (Q).

5. The method as claimed in any of claims 3 and 4, wherein, in order to determine said intersection point (Q) :
   - one starts with a point (E;E') situated on said line at an initial distance, of given value, from said flat support (1),
   - a determining step is performed wherein the relative position of said point (E;E') with respect to said surface (S) is determined and, if said point (E;E') is above said surface (S), its distance from the flat support (1) is increased by steps of constant value (D;D') until said point (E;E') is below said surface (S),
   - said distance is then reduced, by steps of a value $(D/2, D/4,...,D/2^n)$, each time equal to half that of the preceding step, until said point (E;E') is situated above said surface (3),
   - then said distance is increased by steps of a value $(D/2^{n+1},D/2^{n+2},...,D/2^p)$ equal each time to half that of the preceding step, until said point (E;E') is situated below said surface (S),
   - it is so processed until a point (E';E") is obtained whose distance to the preceding point (E;E') is less than a given threshold $(D/2^N)$ and the coordinates of this point (E';E") are assigned to said intersection point (Q).

6. The method as claimed in claim 5, wherein the pixels of the flat support (1) are organized in the form of a matrix having a plurality of lines and a plurality of columns and one proceeds for each column, as follows :
   - it is determined whether the lowest pixel in the column of the flat support (1) is a pixel (4) of the image of the terrain (2) by searching for the first intersection point (Q) of said surface (3) with a line leaving from the point of observation (P) and passing through this pixel, from an initial distance of zero value between the flat support (1) and said point (E) situated on said line, and
   - if this pixel is not an image pixel (4), it is illuminated with a color representing the sky, as well as the following pixels in the same column,
   - if the pixel is an image pixel (4), it is illuminated in the color of the associated map pixel (7') and the next pixel of the column is considered, for which the first intersection point (Q) is sought, by taking, this time, as an initial distance between the flat support (1) and said point (E') situated on said line, the distance between the point of observation (P) and the above determined intersection point (Q).

7. The method as claimed in any of claims 1 to 6, wherein each image pixel (4) is illuminated with the color of the associated map pixel (7') with an intensity varying inversely with the distance between the point of observation (P) and the point (Q) of said assembly of points, associated with this image pixel (4).

8. The method as claimed in any of claims 1 to 6, wherein each image pixel (4) is illuminated in the color of the associated map pixel (7') with an intensity related to the altitude of the point (Q) of said assembly of points, associated with this image pixel.

9. The method as claimed in any of claims 1 to 6, wherein a lighting direction of the terrain being defined, and each image pixel (4) is illuminated, in the color of the associated map pixel (7'), with an intensity which depends on the lighting of the surface (3) in the vicinity of the point (Q) of said assembly of points, associated with this image pixel.

10. A system for representing, on a given flat support (1) and in perspective from a given point of observation (P), the image of a terrain (2) known by the coordinates of the nodes (N) of a given mesh network, including :
    - a first memory (11) for storing the coordinates of said nodes (N),
    - a second memory (14) for storing a planimetric map, or a photography, (5) of the terrain (2) with color information, digitized in the form of map pixels (7,7') of given colors,
    - means (12) for generating a signal (s) of data representative of the point of observation (P) and of the flat support (1),
    - means (13) connected to said first memory (11), to said second memory (14) and to said generating means (12) for associating a map pixel (7') with each image pixel (4) of the image to be represented, and
    - display means (15) connected to said determining means (13) for illuminating said pixels (4) of the image to be represented with the color of the associated map pixel (7'),
    system characterized by the fact that the associating means (13) includes means for determining, by interpolation from said nodes (N), an assembly of points (Q) on this surface (3) in order that said points (Q) are all respectively associated, according to a perspective algorithm, with all the pixels (4) of the image to be represented and for associating, according to a projection algorithm, a map pixel (7') with each one of all these points (Q), i.d. with each of the image pixels (4).

11. The system as claimed in claim 10, wherein said determining means (13) comprises :
    - means (131), connected to said first memory (11), for calculating said surface (3),
    - first means (132,133), connected to said generating means (12) and to said calculating means (131), for associating, with an image pixel (4), the first point of intersection (Q) of said surface (3) with a line leaving from the point of observation (P) and passing through this image pixel (4), and second means (134), connected to said associating means (132,133) and to the second memory (14), for associating, with each of the intersection points (Q), the map pixel (7') on which the point is to be found having the same planimetric coordinates as this intersection point (Q).

**Patentansprüche**

1. Verfahren, das dazu dient, auf einem bestimmten ebenen Medium (1) und in einer von einem bestimmten Beobachtungspunkt (P) aus gesehenen Perspektive das Bild einer Oberfläche (3) eines Geländes (2) darzustellen, welches bekannt ist durch die Koordinaten der Knotenpunkte (N) eines bestimmten Maschennetzes und durch die Pixel (7,7') von bestimmter Farbe einer digitalisierten planimetrischen Karte oder Photographie (5) des Geländes, ein Verfahren, bei dem man jedem Bildpixel (4) des darzustellenden Bildes ein Kartenpixel (7') zuordnet und man jedes Bildpixel in der Farbe des zugehörigen Kartenpixels aufleuchten läßt, dadurch gekennzeichnet, daß man ausgehend von den Knotenpunkten (N) des Maschennetzes durch Interpolation eine Punktmenge (Q) auf dieser Oberfläche ermittelt, so daß sämtliche Punkte (Q) gemäß einem Perspektivalgorithmus jeweils sämtlichen Bildpixeln (4) zugeordnet sind, und man anschließend gemäß einem Projektionsalgorithmus jedem dieser Punkte (Q) ein Kartenpixel (7') zuordnet.

2. Verfahren nach Anspruch 1, bei dem man die Pixel des ebenen Mediums (1), die keine Pixel (4) des Bildes des Geländes (2) sind, in einer Farbe aufleuchten läßt, die den Himmel darstellt.

EP 0 282 364 B1

3. Verfahren nach einen der Ansprüche 1 oder 2, bei dem der einem Bildpixel (4) zugeordnete Punkt der vorgenannten Punktmenge der erste Schnittpunkt (Q) der Oberfläche (3) mit dem Strahl, der vom Beobachtungspunkt (P) ausgeht und durch das Bildpixel (4) läuft, ist.

4. Verfahren nach einem der Ansprüche 1 bis 3, bei dem das einem Punkt (Q) der Punktmenge zugeordnete Kartenpixel das Kartenpixel (7') ist, welches die gleichen planimetrischen Koordinaten besitzt wie dieser Punkt (Q).

5. Verfahren nach einem der Ansprüche 3 oder 4, bei dem man, um den vorgenannten Schnittpunkt (Q) zu bestimmen:
   - von einem Punkt (E; E') ausgeht, der sich auf dem Strahl in einer bestimmten Anfangsentfernung von dem ebenen Medium (1) befindet,
   - man die relative Entfernung dieses Punktes (E; E') in bezug auf die Oberfläche (S) bestimmt, und man, wenn sich dieser Punkt (E; E') über der Oberfläche (S) befindet, seine Entfernung von dem ebenen Medium (1) schrittweise um einen konstanten Wert (D; D') erhöht, bis sich der Punkt (E; E') unter der Oberfläche (S) befindet,
   - man nun diese Entfernung schrittweise um einen Wert verringert, der jedesmal dem halben Wert des vorhergehenden Schrittes entspricht (D/2, D/4, ..., D/2$^n$), bis sich der Punkt (E; E') über der Oberfläche (3) befindet,
   - man anschließend die Entfernung schrittweise um einen Wert erhöht, der jedesmal dem halben Wert des vorhergehenden Schrittes entspricht (D/2$^{n+1}$, D/2$^{n+2}$, ..., D/2$^p$), bis sich der Punkt (E; E') unter der Oberfläche (S) befindet,
   - man auf diese Weise fortfährt, bis man einen Punkt (E'; E'') erhält, dessen Abstand zum vorhergehenden Punkt (E; E') geringer ist als ein festgelegter Schwellenwert (D/2$^N$), und man dem Schnittpunkt (Q) die Koordinaten dieses Punktes (E'; E'') zuordnet.

6. Verfahren nach Anspruch 5, bei dem die Pixel des ebenen Mediums (1) in einer Matrix organisiert sind, die eine Vielzahl von Zeilen und eine Vielzahl von Spalten aufweist, und man Spalte für Spalte wie folgt verfährt:
   - man bestimmt, ob das unterste Pixel der Spalte des ebenen Mediums (1) ein Pixel (4) des Bildes des Geländes (2) ist, indem man den ersten Schnittpunkt (Q) der Oberfläche (3) mit dem Strahl, der vom Beobachtungspunkt (P) ausgeht und durch dieses Pixel läuft, sucht, und zwar ausgehend von einer Anfangsentfernung zwischen dem ebenen Medium (1) und dem Punkt (E) auf diesem Strahl, deren Wert gleich Null ist,
   - man, wenn dieses Pixel kein Bildpixel (4) ist, es in einer Farbe aufleuchten läßt, die den Himmel darstellt, sowie auch alle folgenden Pixel dieser Spalte,
   - man, wenn dieses Pixel ein Bildpixel (4) ist, es in der Farbe des zugehörigen Kartenpixels (7') aufleuchten läßt und man zum nächsten Pixel der Spalte weitergeht, für das man den ersten Schnittpunkt (Q) sucht, wobei man dieses Mal als Anfangsentfernung zwischen dem ebenen Medium (1) und dem Punkt (E') auf dem Strahl die Entfernung zwischen dem Beobachtungspunkt (P) und dem zuvor bestimmten Schnittpunkt (Q) nimmt.

7. Verfahren nach einem der Ansprüche 1 bis 6, bei dem man jedes Bildpixel (4) in der Farbe des zugehörigen Kartenpixels (7') aufleuchten läßt, und zwar mit einer Intensität, die umso geringer ist, je größer die Entfernung zwischen dem Beobachtungspunkt (P) und dem diesem Bildpixel (4) zugeordneten Punkt (Q) der Punktmenge ist.

8. Verfahren nach einem der Ansprüche 1 bis 6, bei dem man jedes Bildpixel (4) in der Farbe des zugehörigen Kartenpixels (7') mit einer Intensität aufleuchten läßt, die von der Höhe des diesem Bildpixel zugeordneten Punktes (Q) der Punktmenge abhängt.

9. Verfahren nach einem der Ansprüche 1 bis 6, bei dem eine Richtung vorgegeben ist, aus der das Gelände beleuchtet wird, und bei dem man jedes Bildpixel (4) in der Farbe des zugehörigen Kartenpixels (7') mit einer Intensität aufleuchten läßt, die von der Stärke der Beleuchtung der Oberfläche (3) in der Umgebung des diesem Bildpixel zugeordneten Punktes (Q) der Punktmenge abhängt.

16

**10.** System, das dazu dient, auf einem bestimmten ebenen Medium (1) und in einer von einem bestimmten Beobachtungspunkt (P) aus gesehenen Perspektive das Bild eines Geländes (2) darzustellen, das bekannt ist durch die Koordinaten der Knotenpunkte (N) eines bestimmten Maschennetzes, ein System umfassend:

- einen ersten Speicher (11), um die Koordinaten dieser Knotenpunkte (N) zu speichern,
- einen zweiten Speicher (14), um eine planimetrische Karte oder Photographie (5) des Geländes (2) zu speichern, die Farbinformationen enthält und in Form von Kartenpixeln (7, 7') mit einer bestimmten Farbe digitalisiert worden ist,
- Mittel (12), um ein Signal (s) von Daten zu erzeugen, die den Beobachtungspunkt (P) und das ebene Medium (1) repräsentieren,
- mit dem ersten Speicher (11), dem zweiten Speicher (14) und den Mitteln zur Erzeugung (12) verbundene Mittel (13), um jedem Bildpixel (4) des darzustellenden Bildes ein Kartenpixel (7') zuzuordnen,
- mit den Mitteln zur Bestimmung (13) verbundene Mittel zur Sichtbarmachung (15), um die Pixel (4) des darzustellenden Bildes in der Farbe des zugehörigen Kartenpixels (7') aufleuchten zu lassen,

ein System, dadurch gekennzeichnet, daß die Zuordnungsmittel (13) Mittel umfassen, um ausgehend von den Knotenpunkten (N) durch Interpolation eine Punktmenge (Q) zu bestimmen, so daß sämtliche Punkte (Q) auf dieser Oberfläche (3) gemäß einem Perspektivalgorithmus jeweils sämtlichen Pixeln (4) des darzustellenden Bildes zugeordnet sind, und um gemäß einem Projektiosalgorithmus jedem dieser Punkte (Q), folglich jedem Bildpixel (4), ein Kartenpixel (7') zuzuordnen.

**11.** System nach Anspruch 10, bei dem die Mittel zur Bestimmung (13) umfassen:
- Mittel (131) zur Berechnung der Oberfläche (3), die mit dem ersten Speicher (11) verbunden sind,
- mit den Mitteln zur Erzeugung (12) und den Mitteln zur Berechnung (131) verbundene erste Mittel (132, 133), um einem Bildpixel (4) den ersten Schnittpunkt (Q) der Oberfläche (3) mit dem Strahl, der vom Beobachtungspunkt (P) ausgeht und durch das Bildpixel (4) läuft, zuzuordnen, und
- mit den Zuordnungsmitteln (132, 133) und dem zweiten Speicher (14) verbundene zweite Mittel (134), um jedem der Schnittpunkte (Q) dasjenige Kartenpixel (7') zuzuordnen, auf dem sich der Punkt befindet, der die gleichen planimetrischen Koordinaten besitzt wie dieser Schnittpunkt (Q).

FIG.1

FIG. 5

Fig 2

Fig 3

EP 0 282 364 B1

Fig 4

21

FIG.6